# EUROPEAN PATENT APPLICATION

(11) **EP 2 390 537 A1**
(43) Date of publication of application: **30.11.2011**
(21) Application number: 09838788.9
(22) Date of filing: 23.01.2009
(51) Int. Cl.: F16J 15/14, F02F 11/00, F16J 15/10

(54) **SEALED STRUCTURE**

(71) Applicant: Toyota Jidosha Kabushiki Kaisha, Toyota-shi, Aichi 471-8571 (JP)
(72) Inventor: YAMAZAKI, Takahiro, Toyota-shi Aichi 471-8571 (JP); OHMURA, Seiji, Toyota-shi Aichi 471-8571 (JP)
(74) Representative: Kuhnen & Wacker
(86) International application number: PCT/JP2009/051038
(87) International publication number: WO 2010/084597

(57) **Abstract**

[Problem] In a seal structure in which a paste gasket 20 having a property of being adhered while being hardened in an elastic state after application is interposed between bonding surfaces of at least two members 2, 3, and 6 so as to implement a seal, the paste gasket 20 is firmly adhered to one member 6 that is made of a material to which the paste gasket 20 is difficult to adhere, so as to improve the sealability at the portions of bonding of the at least two members 2, 3, and 6.

[Means of Solving the Problem] At least one member 6 of the at least two members 2, 3, and 6 is formed of a material having a low density of existence of a functional group on a bonding surface of the one member. A metal thermal spray film 21 is formed on the bonding surface of the one member 6, and the paste gasket 20 is adhered to the metal thermal spray film 21.

## Description

### Technical Field

The present invention relates to a seal structure in which a paste gasket having a property of being adhered while being hardened in an elastic state after application is interposed between bonding surfaces of the at least two members so as to implement a seal.

### Background Art

Conventionally, in internal combustion engines (engines) mounted in vehicles such as an automobile, when a cylinder block and the like are fitted with a timing chain cover, an oil pan, and the like, a seal is interposed between bonding surfaces of the first two members.

While gaskets made of rubber were once in use as the seal, liquid gaskets, for example, have come into use in recent years (for example, see Patent Citation PLT 1).

PLT 1, which is a conventional example, discloses a structure in which a liquid gasket is interposed at portions of bonding of a cylinder block and a cylinder head of an internal combustion engine with a chain cover.

In the conventional example recited in PLT 1, no reference is made as to materials for the cylinder block, the cylinder head, and the chain cover, and no reference is made as to the adhesive strength of the liquid gasket with respect to the foregoing.

Incidentally, PLT 2, which is a conventional example, recites a structure in which a solid gasket 37 is disposed between bonding surfaces of a sleeve 20 made of metal and a resin cover 36 made of elastomer, wherein as described in paragraph 0043, the gasket 37 is formed of a material of the same type as that of the resin cover 36 (nylon elastomer), and wherein these two come into contact with one another without using a primer for enhancing the adhesive strength between the two.

In the conventional example recited in PLT 2, its object is to prevent the sealability of the gasket 36 from deterioration caused by a change in dimensions of the two members, which is in turn caused by a difference in thermal expansion coefficient between the sleeve 20 made of metal and the resin cover 36.

It should be noted that in the paragraph 0053 of the conventional example recited in PLT 2, a primer 61 is described as being disposed between the resin cover 36 and the solid gasket 37 to enhance the adhesive strength of the two members. The gasket 37 is heat-welded via the primer 61. However, no reference is made as to the material of the primer 61.

Also, PLT 3, which is a conventional example, discloses a magnesium member of a structure having a plasma electrolytic oxidation film formed on a base member made of magnesium or a magnesium alloy. The plasma electrolytic oxidation film has a laminated structure including: a dense layer formed on the base material side and having minute pores; and a porous layer formed over the dense layer and having coarse pores.

In the conventional example recited in PLT 3, with the magnesium member, the coarse pores of the porous layer are described to ensure the adhesion strength of a liquid gasket when the liquid gasket is applied to the plasma electrolytic oxidation film on the base member.
PTL 1: JP2002-276462A
PTL 2: JP2007-107484A
PTL 3: JP2007-308757A

### Summary of Invention

### Technical Problem

In the conventional example recited in PLT 2, the gasket 37 used is a solid, as opposed to a paste gasket used in the present invention. Thus, the conventional example recited in PLT 2 and the present invention are each on a different structural basis.

Moreover, it is not clear what the primer 61 disclosed in the conventional example recited in PLT 2 is. Still, the primer 61 serves to heat-weld the solid gasket 37 onto the resin cover 36, as opposed to the primer of the present invention, which serves to firmly adhere the paste gasket to members of resin or a magnesium alloy.

Also, the conventional example recited in PLT 3 is no more than an invention related to a magnesium member, as opposed to the seal structure of the present invention, and does not disclose or suggest the object and concept of the present invention described below.

In view of the above circumstances, it is an object of the present invention to provide a seal structure in which a paste gasket having a property of being adhered while being hardened in an elastic state after application is interposed between bonding surfaces of at least two members so as to implement a seal, wherein the paste gasket is firmly adhered to one member made of a material that is difficult for the paste gasket to adhere, so as to improve the sealability at the portions of bonding of the at least two members.

### Solution to Problem

According to one aspect of the present invention, a seal structure includes: at least two members having bonding surfaces; and a paste gasket interposed between the bonding surfaces, the paste gasket having a property of being adhered while being hardened in an elastic state after application to the bonding surfaces so as to implement a seal. At least one member of the at least two members includes a material having a low density of existence of a functional group on a bonding surface of the one member. A metal thermal spray film is formed on the bonding surface of the one member, and the paste gasket is adhered to the metal thermal spray film.

Examples of the material having a low density of existence of a functional group on a bonding surface include a resin material and a magnesium alloy, as is generally known. The term low density is a relative expression compared with, for example, the cases of iron metal, an aluminum alloy, and the like. Also, the metal thermal spray film refers to a film formed by metal thermal spraying, as is generally known, and a main constituent metal of the metal thermal spray film may be any metal such as aluminum and iron metal.

The resin material, the magnesium alloy, and the like are known for their low adhesive strength with respect to the paste gasket. In the above-described configuration, however, the one member and the paste gasket are firmly adhered to one another via the metal thermal spray film.

This increases the adhesive strength between the one member and the metal thermal spray film, and the adhesive strength between the metal thermal spray film and the paste gasket. Consequently, at the portions of bonding of the at least two members, the sealability of their respective adhering areas improve.

When the metal thermal spray film is formed on the bonding surface of the one member as in the configuration, the bonding surface is melted by the heat of sprayed metal particles, and the sprayed metal particles cut into the melted bonding surface. This prompts metallic bonding of the metal particles with one metal particle after another, thus causing film growth. That is, this anchor effect of metal particles increases the adhesive strength of the metal thermal spray film with respect to the one member.

As is generally known, paste gaskets have relatively high adhesive strength with respect to metal thermal spray films. This results in firm adherence of the paste gasket to the one member.

Moreover, instead of being formed in a mold, the metal thermal spray film is formed by spraying, and therefore, no mold releasing agent attaches to a molding surface. This eliminates the need for washing and the like before application of the paste gasket.

Preferably, another member of the at least two members is made of an aluminum alloy or iron metal. As is generally known, aluminum alloys and iron metal are materials having high densities of existence of functional groups on the surfaces. Accordingly, when the paste gasket is applied to the surface of such material, the paste gasket is firmly adhered to the surface.

Thus, according to the configuration, the paste gasket firmly adhered to the one member side in the above-described manner is firmly adhered to the other member. This improves the sealability of all the bonding areas at the portions of bonding of the at least two members.

Preferably, the bonding surface of the one member is treated with plasma before formation of the metal thermal spray film.

As in the configuration, treating the bonding surface of the one member with plasma increases the adhesive strength of the metal thermal spray film.

This is because treating the one member made of a resin material, a magnesium alloy, or the like with plasma removes an oxide film on the surface of the one member, which makes the surface coarse and causes a multiplicity of functional groups to be added on the surface.

This increases the surface area of the one member and, additionally, increases the density of existence of functional groups on the surface. Consequently, when the metal thermal spray film is formed on the one member, the density of bonding increases between functional groups of the resin material, the magnesium alloy, or the like used as the material of the one member and functional groups of the metal thermal spray film. This increases the adhesive strength of the metal thermal spray film.

This ensures satisfactory sealability of the bonding surfaces of the metal thermal spray film and the one member made of a material of a resin material or a magnesium alloy.

Preferably, a surface of the metal thermal spray film is treated with plasma before application of the paste gasket.

As in this configuration, treating the surface of the metal thermal spray film with plasma increases the adhesive strength of the paste gasket with respect to the metal thermal spray film.

This is because treating the surface of the metal thermal spray film with plasma removes impurities and an oxide film on the surface of the metal thermal spray film, which makes the surface coarse and causes a multiplicity of functional groups to be added on the surface.

This increases the surface area of the metal thermal spray film and, additionally, increases the density of existence of functional groups on the surface. Consequently, when the paste gasket is applied to the metal thermal spray film, the density of bonding increases between functional groups of the metal thermal spray film and functional groups of the paste gasket. This increases the adhesive strength of the paste gasket.

This eliminates the concern of dripping of the paste gasket from the one member in the process of bonding the at least two members after application of the paste gasket, irrespective of the treatment position of the one member. This facilitates the bonding operation. This also improves the sealability realized by the paste gasket interposed between the bonding surfaces of the one member and its counterpart bonding member.

Preferably, the paste gasket is a FIPG of silicone rubber.

It is noted that FIPG is an abbreviation of Formed In Place Gasket, as is generally known. FIPG of silicone rubber can be applied, for example, in the form of a line or a strip, and does not easily lose shape immediately after application. FIPG of silicone rubber also has a property of being adhered while being hardened in an elastic state after application. This facilitates the applying operation on the bonding surfaces and improves the sealability at the bonding surfaces.

### Advantageous Effects of Invention

According to the present invention, in a seal structure in which a paste gasket having a property of being adhered while being hardened in an elastic state after application is interposed between bonding surfaces of at least two members so as to implement a seal, the paste gasket is firmly adhered to one member that is made of a material to which the paste gasket is difficult to adhere, so as to improve the sealability at the portions of bonding of the at least two members.

### Brief Description of Drawings

[fig. 1] FIG.1 is a side view of an embodiment of an internal combustion engine to which a seal structure according to the present invention is applied.
[fig. 2] FIG. 2 is an exploded perspective view of the internal combustion engine shown in FIG. 1.
[fig. 3] FIG. 3 is a cross-sectional view taken along a line (3) - (3) in the direction of the arrow of FIG. 1.
[fig. 4] FIG. 4 is a diagram schematically illustrating how a flange of a timing chain cover is attached with a metal spraying film and a paste gasket.
[fig. 5] FIG. 5 is a perspective view illustrating a process in which the timing chain cover of FIG. 4 is mounted on a cylinder block and a cylinder head.
[fig. 6] FIG. 6 is a perspective view of another embodiment corresponding to FIG. 5.

### Reference Signs List

- 1: Internal combustion engine

- 2: Cylinder block
- 2a: Screw hole of cylinder block
- 3: Cylinder head
- 3a: Screw hole of cylinder head
- 6: Timing chain cover
- 6a: Flange of timing chain cover
- 6b: Through-hole of flange
- 15 5: Bolt
- 20: Paste gasket
- 21 1: Metal thermal spray film

### Description of Embodiments

A best mode for carrying out the present invention will be described in detail by referring to the drawings.

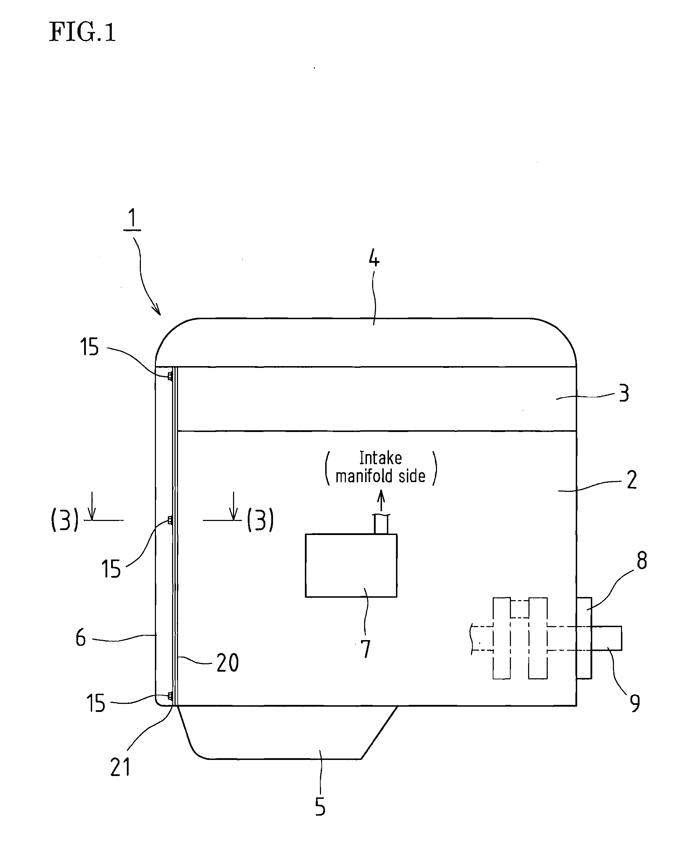

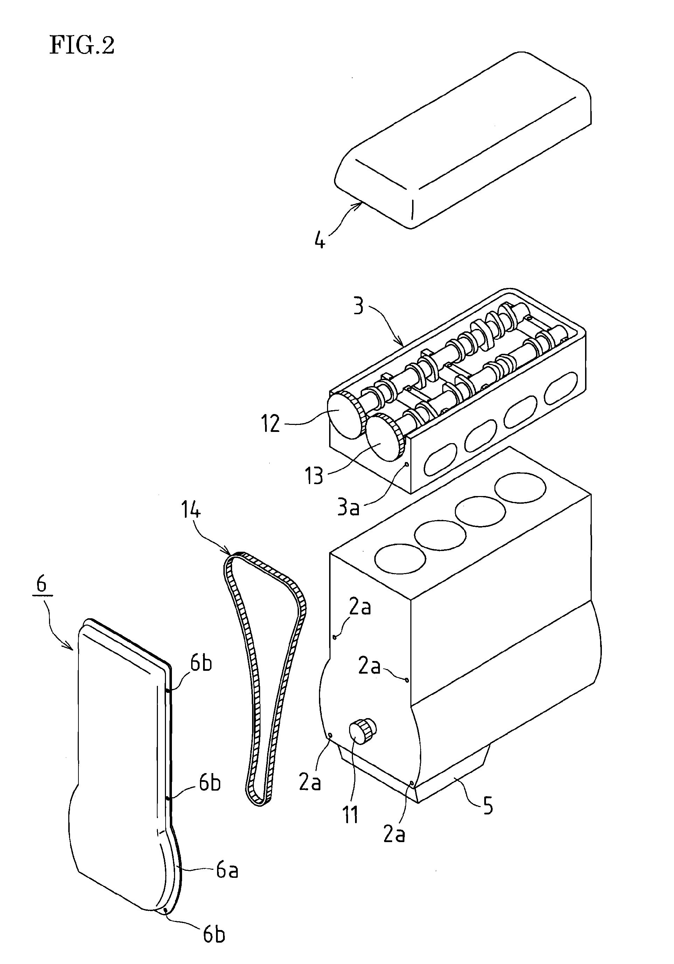

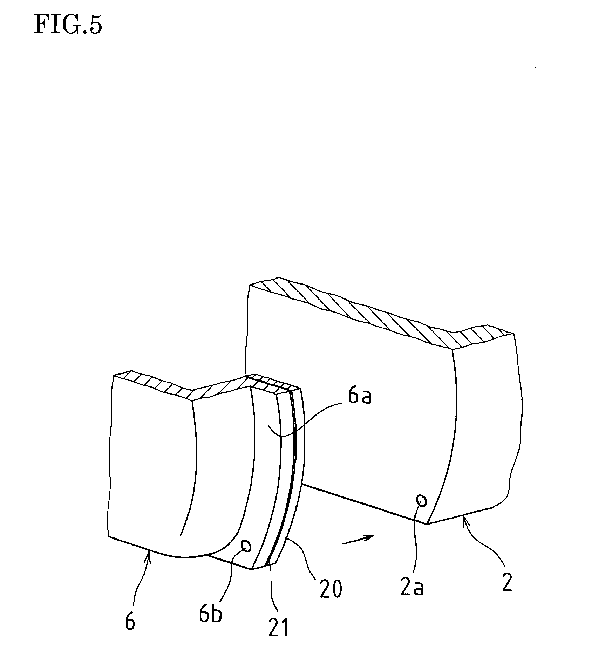

An embodiment of the present invention is shown in FIGs. 1 to 5. A schematic configuration of an internal combustion engine to which the characteristics of the present invention are applied will be described by referring to FIGs. 1 and 2.

In FIGs. 1 and 2, reference numeral 1 denotes an internal combustion engine as a whole, 2 denotes a cylinder block, 3 denotes a cylinder head, 4 denotes a cylinder head cover, 5 denotes an oil pan, 6 denotes a timing chain cover, 7 denotes a PCV plate, and 8 denotes an oil seal retainer.

The timing chain cover 6 hides and protects, from outside, a timing chain (or a timing belt) 14 that is wound around a crank pulley 11, an intake cam pulley 12, and an exhaust cam pulley 13. The PCV plate 7 is mounted at a blow-by gas take-out portion of a PCV device. The oil seal retainer 8 retains an oil seal (not shown) that provides a seal around the outer peripheral surface of a rear end of a crankshaft 9 that protrudes from the cylinder block 2.

In some cases, these timing chain cover 6, the PCV plate 7, and the oil seal retainer 8 each may be formed of an appropriate resin material. Also, in some cases, the cylinder head cover 4 and the oil pan 5 each may be formed of an appropriate resin material. Examples of the appropriate resin materials include engineering plastics in general, such as polypropylene and polyamide.

Meanwhile, the cylinder block 2, the cylinder head 3, and the like, which are counterparts to which the members made of the resin materials are attached, are formed of metal materials such as an aluminum alloy and cast iron.

This embodiment exemplifies the timing chain cover 6 made of resin material. The timing chain cover 6 is secured to the cylinder block 2 and the cylinder head 3 with fastening members such as bolts 15.

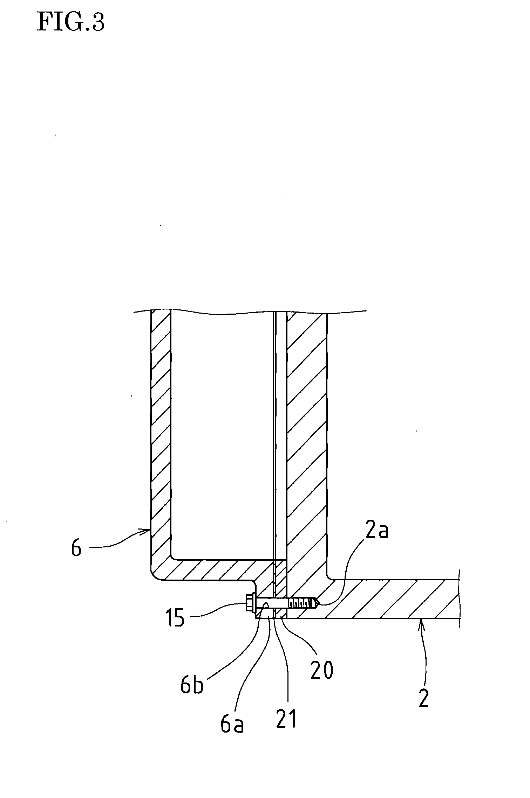

Specifically, as shown in FIGs. 2 and 3, the timing chain cover 6 has, at its outer circumference, a flange 6a protruding externally, and the flange 6a has through-holes 6b through which the bolts 15 are loosely inserted in a state of maintaining an appropriate gap.

Also, the cylinder block 2 and the cylinder head 3, which are counterparts to which the timing chain cover 6 is attached, have on respective front surfaces screw holes 2a and 3a into which the bolts 15 are screwed.

Then, to attach the timing chain cover 6 to the cylinder block 2 and cylinder head 3, the bolts 15 are inserted into the through-holes 6b from outside the flange 6a of the timing chain cover 6, and the bolts 15 are screwed into the screw holes 2a and 3a, respectively of the cylinder block 2 and cylinder head 3.

The paste gasket 20 is interposed between the bonding surfaces of the timing chain cover 6 and of the cylinder block 2 and the cylinder head 3 in order to ensure sealability.

The paste gasket 20 has a property of being adhered while being hardened in an elastic state after application, and for example, FIPG (Formed In Place Gasket), which is generally known, is used. A preferably used FIPG in this embodiment is silicone rubber-based and has an adhesive component, examples including TB1280E and TB1285, trade names, manufactured by ThreeBond Co., Ltd.

Incidentally, the cylinder block 2 and the cylinder head 3 are made of metal materials such as an aluminum alloy and cast iron while the timing chain cover 6 is made of a resin material, as described above. In view of this, the following inventive measure is taken.

In the first place, with a resin material used for the timing chain cover 6, the paste gasket 20 made of FIPG is known to have a low adhesive strength, that is, a poor affinity, with respect to the resin material. This is because resin materials have low densities of existence of hydroxy groups as functional groups on the surfaces, as is generally known. This leads to an extremely low density of hydrogen bonding between the hydroxy groups of the resin material and the hydroxy groups of the paste gasket 20, resulting in a low adhesive strength.

In view of this, in order to increase the adhesive strength of the paste gasket 20 with respect to the flange 6a of the timing chain cover 6, an inventive measure taken in this embodiment is to, as shown in FIG. 3, form a metal thermal spray film 21 on the entire area of the bonding surface of the flange 6a of the timing chain cover 6 before the paste gasket 20 is applied to the flange 6a of the timing chain cover 6, and to apply and adhere the paste gasket 20 on the metal thermal spray film 21.

In summary, the metal thermal spray film 21 serves the role of a connection to firmly adhere the paste gasket 20 to the timing chain cover 6. A main constituent metal of the metal thermal spray film 21 may be any metal such as aluminum and iron metal. Also, the metal thermal spray film 21 may have any thickness, which may be set conveniently in consideration of the degree of solubility of the member to which the metal thermal spray film 21 is formed, and the like.

Further, in this embodiment, a surface of the flange 6a of the timing chain cover 6, that is, the bonding surface, is treated with plasma before the formation of the metal thermal spray film 21, and a surface of the metal thermal spray film 21 is treated with plasma before the application of the paste gasket 20.

Treating the flange 6a of the timing chain cover 6 made of a resin material with plasma removes an oxide film of the resin surface, which makes the surface coarse and causes a multiplicity of hydroxy groups as functional groups to be added on the surface. This increases the surface area of the resin material and, additionally, increases the density of existence of hydroxy groups on the surface. Consequently, when the metal thermal spray film 21 is sprayed to the resin material, the density of bonding increases between the hydroxy groups of the resin material and metal functional groups of the metal thermal spray film 21. This increases the adhesive strength of the metal thermal spray film.

Similarly, treating the metal thermal spray film 21 with plasma removes impurities and an oxide film on the surface of the metal thermal spray film 21, which makes the surface coarse and causes a multiplicity of hydroxy groups as functional groups to be added on the surface. This increases the surface area of the metal thermal spray film 21 and, additionally, increases the density of existence of hydroxy groups on the surface. Consequently, when the paste gasket 20 is applied to the metal thermal spray film 21, the density of bonding increases between the hydroxy groups of the paste gasket 20 and the metal functional groups of the metal thermal spray film 21 with the added hydroxy groups. This increases the adhesive strength of the paste gasket 20.

Next, an operation of attaching the timing chain cover 6 to the cylinder block 2 and cylinder head 3 will be described in detail.

First, as a preparatory step before the attachment, the metal thermal spray film 21 1 is formed on the bonding surface of the flange 6a of the timing chain cover 6, and then the paste gasket 20 is applied and adhered on the foregoing.

Specifically, the bonding surface of the flange 6a is modified by plasma treatment on the bonding surface of the flange 6a. Immediately thereafter, the metal thermal spray film 21 is formed on the bonding surface of the flange 6a, and the surface of the metal thermal spray film 21 is modified by plasma treatment on the metal thermal spray film 21. Immediately thereafter, the paste gasket 20 is applied to the surface of the metal thermal spray film 21.

In the preparatory step, it is possible to carry out the first plasma treatment, the metal thermal spray treatment, the second plasma treatment, and the application treatment of the pates gasket 20 continuously with predetermined time differences.

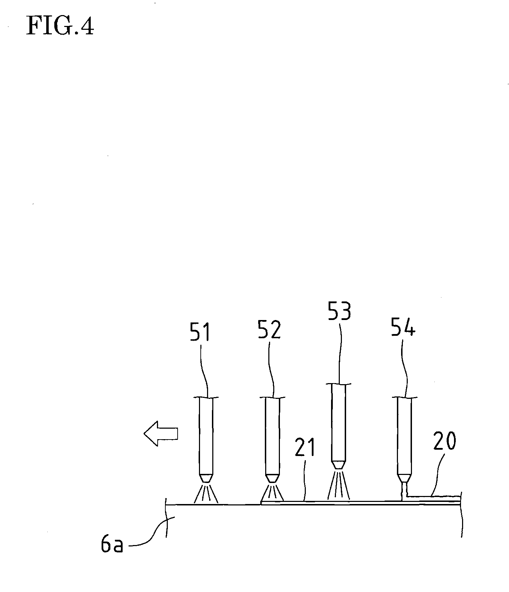

Specifically, as shown in, for example, FIG. 4, a first plasma irradiation nozzle 51, a metal spray nozzle 52, a second plasma irradiation nozzle 53, and a gasket applying nozzle 54 may be disposed in a row with predetermined spatial intervals and retained on a slider or the like, not shown, and each of the nozzles 51 to 54 is shifted on this slider with a predetermined speed along the circumferential direction of the flange 6a.

In this case, immediately after the flange 6a is treated with plasma using the first plasma irradiation nozzle 51, the metal thermal spray film 21 is formed using the metal spray nozzle 52. Immediately thereafter, the surface of the metal thermal spray film 21 is treated with plasma using the second plasma irradiation nozzle 53. Immediately thereafter, the paste gasket 20 is applied in the form of a strip onto the metal thermal spray film 21 using the gasket applying nozzle 54.

When the forefront first plasma irradiation nozzle 51 is shifted in the above-described manner, the metal spray nozzle 52, the second plasma irradiation nozzle 53, and the gasket applying nozzle 54 follow the shifting line. This ensures that each treatment is carried out on the single line, thereby preventing occurrence of misalignments.

For reference, the above-described plasma treatment is such that an electric discharge is generated by direct-current or alternating-current electric fields with respect to gas under a predetermined level of pressure (low pressure or atmospheric pressure), and plasma in a highly-ionized gaseous state is jet-sprayed through an appropriate irradiation nozzle (not shown) and irradiated to the target surfaces (the flange 6a of the timing chain cover 6 and the metal thermal spray film 21).

While there is no particular limitation to the discharging conditions of the plasma treatment, it is preferable that the pressure be set at equal to or less than 10 (Torr). Also, the power source may have a plasma excitation electric field frequency that may be any of constant frequency alternating currents such as 50 (Hz), alternating currents of approximately 1 (kHz) to 100 (kHz), radio waves of 13.56 (MHz) and like frequencies, and microwaves of 2.45 (GHz) and like frequencies. Also, examples of the gas include argon gas, oxygen, air, nitrogen, helium gas, fluorine gas, and ammonia, among which ammonia, oxygen, argon gas, and nitrogen are preferred. Further, the plasma treatment may be in any form, such as ICP high density plasma irradiation, RIE general-purpose plasma irradiation, and atmospheric pressure plasma irradiation.

After the preparatory step ends, the flange 6a of the timing chain cover 6 is pressed against the front surfaces of the cylinder block 2 and the cylinder head 3 so as to adhere the outer surface of the paste gasket 20 applied and adhered on the flange 6a side to the front surfaces of the cylinder block 2 and the cylinder head 3. The cylinder block 2 and the cylinder head 3 are formed of an aluminum alloy or iron metal, as described above, which ensures firm adhesion of the paste gasket 20, as is generally known.

In this respect, aligning the outer peripheral edge of the timing chain cover 6 with the peripheral edges of the cylinder block 2 and the cylinder head 3 ensures an approximate match between the through-holes 6a, which is on the timing chain cover 6 side, and the screw holes 2a and 3a, which are respectively on the side of the cylinder block 2 and the cylinder head 3.

In the attachment step, since the adhesive strength of the paste gasket 20 with respect to the flange 6a of the timing chain cover 6 is enhanced in advance, there is no concern of dripping of the paste gasket 20 from the flange 6a, irrespective of the treatment position of the timing chain cover 6. This facilitates the operation of attaching the timing chain cover 6.

In this state, the bolts 15 are inserted into the through-holes 6b from the outer side of the flange 6a of the timing chain cover 6, and the bolts 15 are screwed into the screw holes 2a and 3a, respectively of the cylinder block 2 and the cylinder head 3.

As has been described hereinbefore, in the embodiment to which the characteristics of the present invention are applied, the paste gasket 20 is firmly adhered to the flange 6a of the timing chain cover 6, which is made of a material to which the paste gasket 20 is difficult to adhere, with the metal thermal spray film 21 serving as a connection.

This increases the adhesive strength between the flange 6a of the timing chain cover 6 and the metal thermal spray film 21, and the adhesive strength between the metal thermal spray film 21 and the paste gasket 20. Moreover, the adhesive strength is originally high between the paste gasket 20 and the cylinder block 2 and the cylinder head 3, which are made of an aluminum alloy or iron metal.

These circumstances improve the sealability of all the adhering areas at the portions of bonding of the cylinder block 2 and the cylinder head 3 with the timing chain cover 6.

It should be noted that the above embodiment should not be construed as limiting the present invention, and that the present invention can be applied to all modifications or applications within the scope of the invention as defined by the appended claims and equivalents thereof. Examples will be given below.

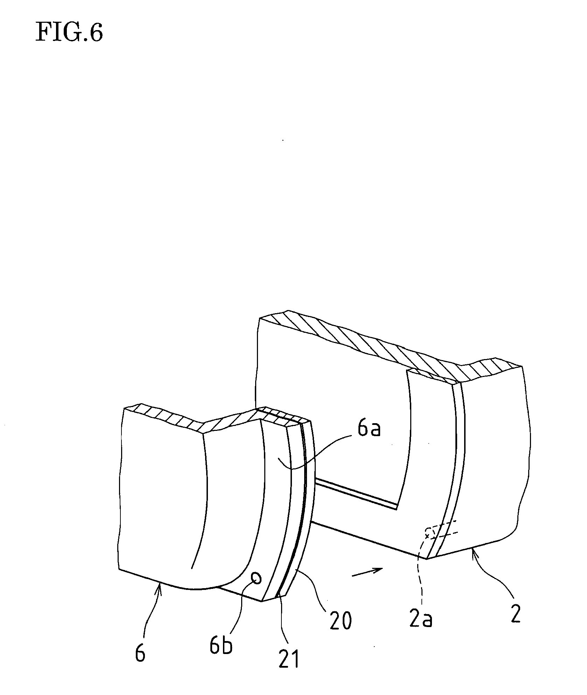

(1) In the above embodiment, the paste gasket 20 is applied and adhered to the flange 6a of the timing chain cover 6, and then joined to the cylinder block 2 and the cylinder head 3 on which the paste gasket 20 is not applied. This, however, should not be construed as limiting the present invention; for example, as shown in FIG. 6, the paste gasket 20 may be applied and adhered to both the flange 6a of the timing chain cover 6 and to the cylinder block 2 and the cylinder head 3, followed by adhesion of the paste gaskets 20 to one another.

(2) The above embodiment describes, by way of example, that the plasma treatment is carried out before the metal thermal spray film 21 is formed on the flange 6a of the timing chain cover 6 and before the paste gasket 20 is applied and adhered to the metal thermal spray film 21. This, however, should not be construed as limiting the present invention; for example, it is possible, though not shown, to carry out the plasma treatment only before the metal thermal spray film 21 is formed on the flange 6a of the timing chain cover 6, or carry out the plasma treatment only before the paste gasket 20 is applied and adhered to the metal thermal spray film 21.

(3) The above embodiment describes, by way of example, that the timing chain cover 6 made of resin is bonded to the cylinder block 2 and the cylinder head 3 that are made of metal. This should not be construed as limiting the present invention.

For example, when the cylinder head cover 4, the oil pan 5, the PCV plate 7, the oil seal retainer 8, and the like shown in FIG. 1 are formed of appropriate resin materials, and when the foregoing are attached to the metallic members such as the cylinder block 2 and the cylinder head 3, then it is possible to apply the seal structure to the respective bonding surfaces.

In some cases, the cylinder head cover 4, the oil pan 5, the PCV plate 7, the oil seal retainer 8, and the like are manufactured from magnesium alloys as materials. As is generally known, magnesium alloys have low densities of existence of functional groups on the surfaces, similarly to resin materials. In this case, however, there will be nothing different from the above embodiment, in that it is only necessary to apply the paste gasket 20 after the metal thermal spray film 21 is formed, as in the above embodiment. Further, in some cases, similarly, the cylinder block 2 and the cylinder head 3 are manufactured from magnesium alloys. In this case, it is preferable to form the metal thermal spray film 21 before the paste gasket 20 is adhered to the bonding surfaces of the cylinder block 2 and the cylinder head 3. In these cases, those described in (2) can be applied.

### Industrial Applicability

The seal structure of the present invention can be applied to portions of bonding of the constituent elements of the internal combustion engine 1 (examples including the cylinder head cover 4, the oil pan 5, the PCV plate 7, and the oil seal retainer 8). Also, the seal structure of the present invention can be applied to various other devices than the internal combustion engine 1, at bonding portions between at least two members.

## Claims

1. A seal structure comprising: at least two members having bonding surfaces; and a paste gasket interposed between the bonding surfaces, the paste gasket having a property of being adhered while being hardened in an elastic state after application to the bonding surfaces so as to implement a seal,
wherein at least one member of the at least two members comprises a material having a low density of existence of a functional group on a bonding surface of the one member, and
wherein a metal thermal spray film is formed on the bonding surface of the one member, and the paste gasket is adhered to the metal thermal spray film.

2. The seal structure according to claim 1, wherein another member of the at least two members comprises an aluminum alloy or iron metal.

3. The seal structure according to claims 1 or 2, wherein the bonding surface of the one member is treated with plasma before formation of the metal thermal spray film.

4. The seal structure according to any one of claims 1 to 3, wherein a surface of the metal thermal spray film is treated with plasma before application of the paste gasket.

5. The seal structure according to any one of claims 1 to 4, wherein the paste gasket comprises a FIPG of silicone rubber.
